# EUROPEAN PATENT SPECIFICATION

(11) **EP 2 600 736 B1**
(45) Date of publication and mention of the grant of the patent: **04.07.2018**
(21) Application number: 11769921.5
(22) Date of filing: 05.08.2011
(51) Int. Cl.: A23L 7/10

(54) **FOOD PRODUCT COMPRISING A BASE INGREDIENT COMPRISING CEREAL SEEDS**
LEBENSMITTELPRODUKT MIT EINER GRUNDZUTAT AUS GETREIDESAMEN
PRODUIT ALIMENTAIRE COMPRENANT UN INGRÉDIENT DE BASE CONTENANT DES CÉRÉALES

(30) Priority: 05.08.2010 IT VR20100164
(43) Date of publication of application: 12.06.2013
(60) Divisional application: 17150729.6
(73) Proprietor: Mister Bio Food S.r.l., 36070 Crespadoro (Vicenza) (IT); Frescolat S.r.l., 31031 Caerano di San Marco (TV) (IT)
(72) Inventor: VESSIO, Francesco, 36070 Crespadoro (VICENZA) (IT); TONIN, Pia, 36070 Crespadoro (VICENZA) (IT); BUFFOLO, Andrea, 36070 Crespadoro (VICENZA) (IT)
(74) Representative: Feltrinelli, Secondo Andrea
(86) International application number: PCT/IB2011/001822
(87) International publication number: WO 2012/017308

(56) References cited:
- EP-A1- 0 131 075
- WO-A1-2005/002367
- WO-A1-2010/023351
- WO-A2-2011/039308
- GB-A- 609 704
- GB-A- 1 466 479
- US-A- 3 885 048

## Description

### TECHNICAL FIELD OF THE INVENTION

The present invention concerns a food product comprising a base ingredient comprising cereal seeds.

### STATE OF THE ART

In the food industry, continuous development and research is carried out in order to obtain food products of better quality and organoleptic characteristics, in order to improve the health and well-being of the users of such products.

The international application WO 2010/023351 A1 discloses an oat suspension and a powder made thereof that can be used for preparing drinks and other non-dairy products with improved sensory properties.

The international application WO 2005/002367 A1 discloses a therapeutical composition and food products made from oat fractions.

The European application EP 0131075 A1 discloses meat-like foodstuffs prepared in a process which comprises mixing an oil-in-water type emulsion with fibrous protein, such as soy bean and binders. Proteins can be of vegetable or animal origin.

Moreover, with the increasingly widespread occurrence of allergies and food intolerances, a need has arisen to identify products of natural origin, often biological, which do not contain irritant and allergenic substances. In this way, these products can be used safely by a wide range of users, even those suffering from the aforementioned intolerances and allergies.

The food products object of the present invention are completely organic and usually do not contain substances that can be poorly tolerated by users suffering from certain intolerances and/or pathologies and/or specific dietary requirements, such as: saccharose, lactose and egg.

### PURPOSES OF THE INVENTION.

A purpose of the present invention is to provide a food product that comprises cereal seeds.

A further purpose of the present invention is to obtain a vegetable-based food product.

According to an aspect of the present invention, these purposes are achieved by a food product as specified in independent claim 1.

The dependent claims refer to preferred and advantageous embodiments of the invention.

### EMBODIMENTS OF THE INVENTION.

The object of present invention is a food product that comprises a base ingredient consisting of seeds derived from cereal. Preferably, the plants from which such seeds are obtained are cultivated biologically or in any case limiting the use of pesticides and fertilizers.

Such a base ingredient is in the form of a fluid or, not according to the present invention, of an anhydrous powder.

The most important cereals from which such seeds are obtained are: corn and/or wheat and/or rice and/or barley and/or sorghum and/or millet and/or oat and/or rye and/or buckwheat, etc.

In a further embodiment, according to the present invention, the base ingredient consists of seeds derived from gluten-free cereals. In this case, the gluten-free cereals are selected from the group consisting of: rice, corn, millet, buckwheat, sorghum, amaranth, quinoa.

Cereals provide most of its nutritional energy as starch and they are also important sources of protein, as well as vitamins, amino acids and mineral salts.

The seeds derived from the aforementioned cereals can consist of polished and/or whole grains. The latter are so called wholegrain seeds, which keep the bran and the germ, and in this way are richer in fibre, fatty acids and other precious substances for the body.

The seeds derived from cereals can, in a further embodiment not according to the present invention, be semi-wholegrain, in other words seeds in which just a most outer part of the kernel is eliminated. In a preferred but not exclusive embodiment, such wholegrain seeds can be used as such or possibly be sprouted before use, so as to improve the availability of the nutritional elements of the seeds themselves. The food product according to the invention can possibly contain mixtures of seeds, both sprouted and non-sprouted.

According to a version of the invention, the seeds used are derived from rice.

In an embodiment, the base ingredient comprises sprouted wholegrain rice seeds.

In a further embodiment, the base ingredient can comprise, in addition to the aforementioned seeds derived from cereals, also seeds derived from legumes.

The most important legumes for obtaining the aforementioned food product are: beans and/or broad beans and/or peas and/or lupins and/or chickpeas and/or peanuts and /o soybean and/or lentils, etc. In an alternative embodiment, in order to obtain the aforementioned food product soybean is not used, due to the allergy and/or intolerance problems that it can cause in some users. In this case, the base ingredient comprises legume seeds selected from the group consisting of beans and/or broad beans and/or peas and/or lupins and/or chickpeas and/or lentils and/or chickling and/or peanuts and/or fabecee and/or trees like acacia (Acacia) and/or pagoda tree (Sophora) and/or false acacia (Robinia pseudoacacia) and/or carub tree (Ceratonia siliqua).

In general, legume seeds contain proteins and also supply a large amount of energy, consisting mostly of carbohydrates. Moreover, they are a source of folic acid, vitamin B1, vitamin H, various minerals including iron, zinc and magnesium, fibres, etc.

In a further embodiment, the base ingredient comprises seeds obtained in general from edible and/or officinal herbs, like, for example, taraxacum, garlic, aloe, laurel, camomile, etc.

The food product according to the present invention comprises water and/or pure water and/or purified water and/or mineral water and/or spring water.

The use of seeds to make the base ingredient, in particular, in the presence of sprouted seeds, determines a particular sensitivity to the attack of pathogens, such as bacteria, fungi or microorganisms in general.

The processing according to the present invention, as better described hereafter, makes it possible to overcome this drawback, managing to keep microbiological contamination under control and allowing a microbiologically stable food product to be obtained.

The base ingredient according to the present invention preferably comprises wholegrain seeds.

Such seeds, moreover, in an embodiment of the invention, are micronized in order to obtain micronized particles. Such micronized seeds have, also for the fibrous components, a size of the particles of less than about 30 microns. Preferably, such a size is less than 27 microns, if the micronization step occurs under a pressure of between 50 and 1500 bar. Such a micronization process can also take place completely in water to avoid the possible oxidation of the seeds that, normally, occurs with conventional grinding.

The base product, according to a variant of the present invention or in a non-limiting embodiment of the invention, comprises a high-pressure step, the optimal range of which is between 3000 and 15000 bar, to avoid the use of heat treatments (for example pasteurization or UHT treatments) which can alter the organoleptic properties of the base ingredient itself.

The food product according to the present invention also comprises thickeners and flavourings that can modify its consistency, flavour and/or composition. The thickeners can be of natural and/or artificial origin and determine an increase in the density and consistency of the base ingredient.

Such thickeners comprise, for example, carrageenan and/or agar-agar and/or starches and/or carob seeds and/or guar and/or xanthan and/or, in general, substances commonly used for such a purpose.

The flavourings included in the food product according to the invention can be of various kind, usually able to be used in the food industry, of the natural and/or artificial type.

Such aromatic molecules comprise: benzaldehyde or benzoic aldehyde, for example to give an almond and black cherry flavour and/or anethole, for example to give an aniseed flavour and/or g-nonalactone, for example to give a coconut flavour and/or eugenol, for example to give a cinnamon flavour and/or menthol, for example to give a balsam flavour and/or diacetyl and butyric acid, for example to give a butter flavour and/or L-carvone, for example to give a peppermint flavour and/or vanillin and/or ethylvanillin, for example to give a vanilla flavour and/or bismethylthiomethane, for example to give a truffle flavour and/or phenylmethylbutyrate, for example to give an apple flavour and/or ethyl butanoate, for example to give a vinegar flavour and/or ethyl acetate, for example to give a kiwi flavour and/or amylacetateisovalerianateisomyl and/or Ylang Ylang, for example to give a banana flavour and/or fencone, for example to give a fennel flavour and/or apiol, for example to give a parsley flavour and/or furylmethanethiol and/or alpha-furfurylmercaptan, for example to give a coffee flavour and/or β-damascenonetetramethlpyrazine, for example to give a tea flavour and/or phenylacetic acid and/or fenilethyl acetate, for example to give a honey flavour and/or g-undecalactone, for example to give a peach flavour and/or allyl caproate, for example to give a pineapple flavour and/or frambinone and/or raspberry ketone, for example to give a raspberry flavour and/or ethyl cinnamate, for example to give a cherry flavour and/or methylethylbutanoate, for example to give a red fruit flavour and/or methylthiopropanol, for example to give a boiled potato flavour and/or diallyl disulphide, for example to give a garlic flavour and/or allylpropyl disulphide, for example to give an onion flavour and/or methoxymethylpyrazine, for example to give a pepper flavour and/or heptanoloctanol alcohol, for example to give a mushroom flavour and/or valeric acid and/or isobutyric acid, for example to give a cheese flavour and/or heptanonemethylthiobutyrate, for example to give a gorgonzola flavour and/or trimethylamine, for example to give a fish flavour and/or methylpyridylketone, for example to give a popcorn flavour and/or ethylhydroxybutanoate, for example to give a meringue flavour and/or pyroligneous acid, for example to give a smoked flavour and/or furaneol, for example to give a strawberry flavour and/or methoxymethylpyrazine, for example to give a toasted hazelnut flavour and/or other flavourings usually used for such a purpose, etc.

The aforementioned flavourings also comprise the aromatic molecules usually used to flavour processed meats and/or the flavourings of aromatic plants, both of the natural and synthetic type, and/or beechwood smoke, and/or spices and/or flavourings for spices, etc.

The food product according to the present invention can optionally comprise lipid or fatty acids, which are emulsified to give particular characteristics of creaminess and consistency to the product itself.

Such lipids comprise coconut oil and/or olive oil and/or seed oil and/or vegetable oil in general and/or vegetable margarine, etc.

The food product according to the present invention does not contain animal components or fats and is completely vegetable. Moreover, it does not contain cholesterol, preservatives, lactose, or chemical dyes. In a particular version, the food product according to the invention comprises just substances allowed for biological agriculture, as indicated in European Regulation No.834/2007 and in European Regulation No.889/08.

In an embodiment, the base ingredient, when present in fluid form, comprises a protein and/or fibrous portion and a sugary liquid component and it can be treated in order to separate the protein and/or fibrous portion thereof from the sugary liquid component. The sugary liquid component contains simple sugars, such as maltose, glucose, etc. and is free from saccharose.

Using the protein and/or fibrous portion, the base ingredient, and/or the consequent food product not according to the present invention, is enriched in proteins and/or noble substances contained in the fibrous part thereof. The base ingredient thus obtained, having had the starches and sugars present in the liquid component taken away, is more dietetic and has a lower calorie content than the base ingredient before separation.

The protein and/or fibrous portion obtained from the base ingredient is suitable for being used as such and/or for enriching the food product, not object of the present invention, with proteins and/or noble substances. Such a protein and/or fibrous portion is also suitable for being used for other purposes, for example as a component of cosmetic or medical compositions and/or as a component of food supplements.

Using the sugary liquid component, which can be as such or variously concentrated, the base ingredient, and/or the consequent food product not according to the present invention, is sweetened. The addition of such a sugary liquid substance, free from saccharose or other added sugars, makes it possible to obtain a base ingredient and/or a food product without the need to declare the presence of sweeteners in them. The sugary liquid, protein and/or fibrous component, obtained from the base ingredient is suitable for being used as such and/or as a sweetener for the food product not object of the present invention. Such a sugary liquid component is also suitable for being used for other purposes, for example as a component of cosmetic or medical compositions and/or as a component of food supplements.

In a further embodiment, especially in the case of semi-wholegrain, wholegrain or sprouted wholegrain seeds, the food product according to the invention can be treated through enzyme processes, such as glucotransaminase-based treatments for compacting the proteins and/or alpha-beta-amylase treatments that hydrolyse the starches, and/or, in general, treatments with other enzymes and/or through acid-lactic fermentation. Such enzyme and/or fermentation processes are suitable for facilitating the bioavailability of the seeds themselves.

However, such enzymes are not limited to the examples indicated above and can be variously used as such and/or in mixtures to obtain the desired food product.

In an embodiment of the invention, the enzyme treatments used determine a hydrolysation of the starches in sugars whereas fermentation processes do not take place.

The food product according to the invention can be at least partially dried through atomisation treatments, roller drum, microwaves, heat treatments, desiccators, dehydrators, etc.

Following such drying and/or following concentration, the percentage of water present in the aforementioned food product can be between 1% and 95% for processing requirements of the product itself.

The food product comprising percentages of water between 50% and 95% is in liquid form, for example to obtain milk substitutes and/or drinks and/substitutes for foods in liquid form.

Such milk substitutes and/or drinks can also be enriched with proteins or sweeteners, thanks to the use of the protein and/or fibrous portion or of the sugary liquid component of the base ingredient.

The food product according to the invention, based on seeds obtained from cereals and variously added to and/or dried, can undergo pasteurization or UHT sterilization treatments or other known technologies to improve their conservation characteristics. The food product according to the invention is then packaged to be suitable for subsequent commercialisation.

In a non-limiting embodiment of the invention, the food product according to the present invention undergoes high-pressure treatments, with optimal pressure values within a range between 3000 and 15000 bar, suitable for lowering the microbe content thereof.

In this way the food product according to the present invention is prevented from undergoing heavy alterations in nutritional content and in the organoleptic characteristics thereof.

The food product according to the invention is in the form of a food substitute, in other words a food replacement, which is vegetable-based and in particular cereal seed-based, suitable for replacing, in the food industry, products of animal origin. Such a substitute can be, not according to the present invention, a substitute for cheese, meat, fish or preparations for the confectionary industry, according to whether it replaces and has the characteristics - such as taste, aroma and consistency - of cheese, meat, fish or of preparations for the confectionary industry of conventional origin.

Such a substitute, according to the present invention, can be a milk substitute and/or a vegetable drink.

Such substitutes can be used as such or in industrial or home-made preparations, like, as a non-limiting example, savoury preparations such as cheeses, meats, fish, etc. (not according to the present invention) or sweet preparations, such as pudding, yoghurt, sour cream, cream spreads and preparations usually made using milk of animal origin, and/or milk substitute itself.

Therefore, the food product according to the invention, based on the various percentages, compositions and mixtures of the thickeners, of the flavourings and, possibly, of the lipids that it contains, can have a particular or desired taste, composition and aroma.

The food product according to the present invention, therefore, replaces "original" foodstuffs, such as, not according to the present invention, cheese, meat, fish, sweets, or, according to the present invention, milk, drinks, etc. However, since it is of vegetable instead of animal origin, such a food product can also be used by people suffering from allergies, intolerances, particular pathologies, or who follow certain diets such as vegetarians, vegans and, in general, anybody who prefers to use foodstuffs of vegetable origin rather that foodstuffs of another origin.

Moreover, the food product according to the present invention can be used as an ingredient for various food preparations, both sweet and savoury.

## Claims

1. Vegetable food product, free from saccharose, lactose and egg, comprising a base ingredient, wherein said base ingredient comprises water and micronized particles of wholegrain gluten-free cereal seeds and is in the form of a fluid, wherein it comprises thickeners and flavourings, which give said food product a food substitute character in the form of vegetable drink **characterised in that** said gluten-free cereals are selected from the group consisting of: rice, corn, millet, buckwheat, sorghum, amaranth, quinoa, **in that** said vegetable food product does not contain soybean **and in that** said wholegrain seeds are sprouted seeds.

2. Vegetable food product according to claim 1, wherein the percentage of water is between 50% and 95%.

3. Food product according to claim 1, wherein said wholegrain seeds are rice seeds.

4. Food product according to one of the previous claims, wherein said thickeners comprise carrageenan and/or agar-agar and/or starches and/or carob seeds and/or guar and/or xanthan.

5. Food product according to claim 1, wherein said flavourings comprise diacetyl and butyric acid, to give a butter flavour, and/or valeric acid and/or isobutyric acid, to give a cheese flavour and/or heptanonemethylthiobutyrate, to give a gorgonzola flavour.

6. Food product according to claim 1, wherein said flavourings comprise aromatic molecules to flavour processed meats.

7. Food product according to claim 1, wherein said flavourings comprise trimethylamine, to give a fish flavour.

8. Food product according to one of the previous claims, wherein said flavourings comprise flavourings of the natural and/or artificial type, and/or benzaldehyde or benzoic aldehyde to give an almond and black cherry flavour, and/or anethole to give an aniseed flavour, and/or g-nonalactone to give a coconut flavour, and/or eugenol to give a cinnamon flavour, and/or menthol to give a balsam flavour, and/or L-carvone to give a peppermint flavour, and/or vanillin and/or ethylvanillin to give a vanilla flavour, and/or bismethylthiomethane to give a truffle flavour, and/or phenylmethylbutyrate to give an apple flavour, and/or ethyl butanoate to give a vinegar flavour, and/or ethyl acetate to give a kiwi flavour, and/or amylacetateisovalerianateisomyl and/or Ylang Ylang to give a banana flavour, and/or fencone to give a fennel flavour, and/or apiol to give a parsley flavour, and/or furylmethanethiol and/or alpha-furfurylmercaptan to give a coffee flavour, and/or β-damascenonetetramethylpyrazine to give a tea flavour, and/or phenylacetic acid and/or phenylethyl acetate to give a honey flavour, and/or g-undecalactone to give a peach flavour, and/or allyl caproate to give a pineapple flavour, and/or frambinone and/or raspberry ketone to give a raspberry flavour, and/or ethyl cinnamate to give a cherry flavour, and/or methylethylbutanoate to give a red fruit flavour, and/or methylthiopropanol to give a boiled potato flavour, and/or diallyl disulphide to give a garlic flavour, and/or allylpropyl disulphide to give an onion flavour, and/or methoxymethylpyrazine to give a pepper flavour, and/or heptanoloctanol alcohol to give a mushroom flavour, and/or methylpyridylketone to give a popcorn flavour, and/or ethylhydroxybutanoate to give a meringue flavour, and/or pyroligneous acid to give a smoked flavour, and/or furaneol to give a strawberry flavour, and/or methoxymethylpyrazine to give a toasted hazelnut flavour, and/or the flavourings of aromatic plants, both of natural and synthetic kind, and/or beechwood smoke, and/or spices and/or flavourings for spices.

9. Food product according to one of the previous claims, wherein said food product comprises lipids, such as coconut oil and/or olive oil and/or seed oil and/or vegetable oil in general and/or vegetable margarines.

10. Food product according to one of the previous claims, wherein said food product comprises seeds rich in bioavailable nutritional substances obtained through treatments such as enzyme processes, like glucotransaminase-based treatments for compacting proteins and/or alpha-beta-amylases that hydrolyse starches, and/or, in general, treatments with other enzymes and/or through acid-lactic fermentation.

11. Food product according to one of the previous claims, wherein said food product comprises pure water and/or purified water and/or mineral water and/or spring water.

12. Food product according to one of the previous claims, wherein said food product is pasteurised and/or sterilised by UHT or treated at a pressure within a range between 3000 and 15000 bar.

13. Food product according to one of the previous claims, wherein said base ingredient comprises legume seeds and/or wherein said base ingredient comprises legume seeds selected from the group consisting of beans and/or broad beans and/or peas and/or lupins and/or chickpeas and/or peanuts and/or lentils and/or chickling and/or fabaceae and/or trees like acacia (Acacia) and/or pagoda tree (Sophora) and/or false acacia (Robinia pseudoacacia) and/or carub tree (Ceratonia siliqua) and/or wherein said base ingredient comprising seeds obtained from edible and/or officinal herbs, like, for example, taraxacum, garlic, aloe, laurel, camomile.

14. Food product according to any one of the previous claims, wherein said micronized particles have a size of less than 30 microns.

15. Method for obtaining a vegetable food product, free from saccharose, lactose, egg and soybean according to any one of claims 1 to 14, comprising the following steps:
providing a base ingredient in the form of a fluid and comprising water and wholegrain gluten-free cereal seeds, wherein said gluten-free cereals are selected from the group consisting of: rice, corn, millet, buckwheat, sorghum, amaranth, quinoa,
micronizing said cereal seeds in order to obtain micronized particles,
providing thickeners, of natural and/or artificial origin which determine an increase in the density and consistency of the base ingredient, and flavourings, which flavourings give said food product a food substitute character, such as a food substitute in the form of vegetable drink,
wherein said micronizing step takes place completely in water to avoid the possible oxidation of said seeds,
wherein said food product comprises wholegrain seeds that are sprouted seeds.

16. Method according to claim 15, wherein said wholegrain seeds are rice seeds.

17. Method according to claim 15, wherein said micronizing step occurs at a pressure of between 50 and 1500 bar to obtaining a particle size less than 27 micron, and wherein said food product is pasteurised and/or sterilised by UHT or wherein said food product is treated at a pressure within a range between 3000 and 15000 bar.

18. Method according to any one of claims 15 to 17, wherein said food product comprises seeds rich in bioavailable nutritional substances obtained through treatments such as enzyme processes, like glucotransaminase-based treatments for compacting proteins and/or alpha-beta-amylases that hydrolyse starches, and/or, in general, treatments with other enzymes and/or through acid-lactic fermentation.

19. Method according to any one of claims 15 to 18, comprising the steps of:
providing lipids, such as coconut oil and/or olive oil and/or seed oil and/or vegetable oil in general and/or vegetable margarines,
emulsifying said lipid or fatty acids to give a creaminess and consistency characteristics to said food product, and/or
providing said base ingredient comprising legume seeds and/or legume seeds selected from the group consisting of beans and/or broad beans and/or peas and/or lupins and/or chickpeas and/or peanuts and/or lentils and/or chickling and/or fabaceae and/or trees like acacia (Acacia) and/or pagoda tree (Sophora) and/or false acacia (Robinia pseudoacacia) and/or carub tree (Ceratonia siliqua) and/or seeds obtained from edible and/or officinal herbs, like, for example, taraxacum, garlic, aloe, laurel, camomile.

20. Method according to any one of claims from 15 to 19, comprising a step of drying at least partially said food product through atomisation treatments, roller drum, microwaves, heat treatments, desiccators, dehydrators.

## Patentansprüche

1. Pflanzliches Lebensmittelerzeugnis, saccharose-, laktose- und eifrei, bestehend aus einem Hauptbestandteil, wobei der Hauptbestandteil Wasser und mikronisierte Partikel von glutenfreien Vollkorn-Getreidesamen enthält und in Fluidform ist, wobei es Verdickungsmittel und Aromastoffe enthält, die dem Lebensmittelerzeugnis den Charakter eines Nahrungsmittelersatzes in Form eines pflanzlichen Getränks verleihen, **das dadurch gekennzeichnet ist, dass** die glutenfreien Getreide aus der Gruppe bestehend aus: Reis, Mais, Hirse, Buchweizen, Sorghum, Amarant, Quinoa ausgewählt werden, **dass** dieses pflanzliche Lebensmittelerzeugnis keine Sojabohnen enthält **und dass** die Vollkornsamen Keimlinge sind.

2. Pflanzliches Lebensmittelerzeugnis nach Anspruch 1, wobei der Anteil an Wasser zwischen 50 % und 95 % liegt.

3. Lebensmittelerzeugnis nach Anspruch 1, wobei die Vollkornsamen Reissamen sind.

4. Lebensmittelerzeugnis nach einem der vorhergehenden Ansprüche, wobei die Verdickungsmittel Carrageen und/oder Agar-Agar und/oder Stärken und/oder Johannisbrotkerne und/oder Guar und/oder Xanthan umfassen.

5. Lebensmittelerzeugnis nach Anspruch 1, wobei die Aromastoffe Diacetyl und Buttersäure umfassen, um ein Butteraroma zu verleihen, und/oder Valeriansäure und/oder Isobuttersäure, um ein Käsearoma zu verleihen und/oder Heptanon-Methylthiobutyrat, um ein Gorgonzola-Aroma zu verleihen.

6. Lebensmittelerzeugnis nach Anspruch 1, wobei die Aromastoffe aromatische Moleküle umfassen, um das verarbeitete Fleisch zu würzen.

7. Lebensmittelerzeugnis nach Anspruch 1, wobei die Aromastoffe Trimethylamin umfassen, um ein Fischaroma zu verleihen.

8. Lebensmittelerzeugnis nach einem der vorhergehenden Ansprüche, wobei die Aromastoffe Aromastoffe natürlicher und/oder künstlicher Art umfassen, und/oder Benzaldehyd oder Benzoesäure, um ein Mandel- und Schwarzkirschen-Aroma zu verleihen, und/oder Anethol, um ein Anisaroma zu verleihen, und/oder G-Nonalacton, um ein Kokusnussaroma zu verleihen, und/oder Euganol, um ein Zimtaroma zu verleihen, und/oder Menthol, um ein Balsamaroma zu verleihen, und/oder L-Carvon, um ein Pfefferminzaroma zu verleihen, und/oder Vanillin und/oder Ethylvanillin, um ein Vanillearoma zu verleihen, und/oder Bis(methylthio-)methan, um ein Trüffelaroma zu verleihen, und/oder Phenylmethylbutyrat, um ein Apfelaroma zu verleihen, und/oder Ethylbutanoat, um ein Essigaroma zu verleihen, und/oder Ethylacetat, um ein Kiwiaroma zu verleihen, und/oder Amylacetatisovalerianatisomyl und/oder Ylang Ylang, um ein Bananearoma zu verleihen, und/oder Fenchon, um ein Fenchelaroma zu verleihen, und/oder Apiol, um ein Petersiliearoma zu verleihen, und/oder Furylmethanethiol und/oder Alpha-Furfurylmerkaptan, um ein Kaffeearoma zu verleihen, und/oder β-Damascenontetramethylpyrazin, um ein Teearoma zu verleihen, und/oder Phenylessigsäure und/oder Phenyläthylacetat, um ein Honigaroma zu verleihen, und/oder g-Undecalacton, um ein Pfirsicharoma zu verleihen, und/oder Allylcaproat, um ein Ananasaroma zu verleihen, und/oder Frambinon und/oder Himbeerketon, um ein Himbeeraroma zu verleihen, und/oder Zimtsäureethylester, um ein Kirscharoma zu verleihen, und/oder Methylethylbutanoat, um ein Rote-Früchtearoma zu verleihen, und/oder Methylthiopropanol, um ein Aroma von gekochter Kartoffel zu verleihen, und/oder Diallyl-Disulfid, um ein Knoblaucharoma zu verleihen, und/oder Allylpropyldisulfid, um ein Zwiebelaroma zu verleihen, und/oder Methoxy-Methylpyrazin, um ein Pfefferaroma zu verleihen, und/oder Heptanol-Octanol-Alkohol, um ein Pilzaroma zu verleihen, und/oder Methylpyridylketon, um ein Popkornaroma zu verleihen, und/oder Ethylhydroxybutanoat, um ein Meringuearoma zu verleihen, und/oder Holzessig, um ein Raucharoma zu verleihen, und/oder Furaneol, um ein Erdbeeraroma zu verleihen, und/oder Methoxymethylpyrazin, um ein Aroma von gerösteten Haselnüssen zu verleihen, und/oder die Aromastoffe von aromatischen Pflanzen, sowohl natürlicher als auch synthetischer Art, und/oder Buchenholzrauch, und/oder Gewürze und/oder Aromastoffe für Gewürze.

9. Lebensmittelerzeugnis nach einem der vorhergehenden Ansprüche, wobei das Lebensmittelerzeugnis Lipide umfasst, wie Kokosöl und/oder Olivenöl und/oder Samenöl und/oder Pflanzenöl im Allgemeinen und/oder Pflanzenmargarinen.

10. Lebensmittelerzeugnis nach einem der vorhergehenden Ansprüche, wobei das Lebensmittelerzeugnis Samen enthält, die reich an bioverfügbaren Nährstoffen sind, die durch Behandlungen erhalten werden wie Enzymverfahren, wie Glucotransaminase-basierte Behandlungen für die Verdichtung von Proteinen und/oder Alfa-Beta-Amylasen, die Stärken hydrolysieren, und/oder allgemein Behandlungen mit anderen Enzymen und/oder durch Milchsäuregärung.

11. Lebensmittelerzeugnis nach einem der vorhergehenden Ansprüche, wobei das Lebensmittelerzeugnis reines Wasser und/oder gereinigtes Wasser und/oder Mineralwasser und/oder Quellwasser umfasst.

12. Lebensmittelerzeugnis nach einem der vorhergehenden Ansprüche, wobei das Lebensmittelerzeugnis pasteurisiert ist und/oder durch Ultrahocherhitzung sterilisiert ist oder bei einem Druck in einem Bereich zwischen 3000 und 15000 Bar behandelt wurde.

13. Lebensmittelerzeugnis nach einem der vorhergehenden Ansprüche, wobei der Hauptbestandteil Leguminosesamen umfasst und/oder wobei der Hauptbestandteil Leguminosesamen umfasst, die aus der Gruppe bestehend aus Bohnen und/oder Ackerbohnen und/oder Erbsen und/oder Lupinen und/oder Kichererbsen und/oder Erdnüssen und/oder Linsen und/oder Platterbsen und/oder Fabaceae bzw. Bäumen wie Akazien (Acacia) und/oder Pagodenbaum (Sophora) und/oder falsche Akazie (Robinia pseudoacacia) und/oder Johannisbrotbaum (Ceratonia siliqua) ausgewählt werden und/oder wobei der Hauptbestandteil Samen aus verzehrbaren und/oder Heilpflanzen wie beispielsweise Taraxacum, Knoblauch, Aloe, Lorbeer, Kamille umfasst.

14. Lebensmittelerzeugnis nach einem der vorhergehenden Ansprüche, wobei die mikronisierten Partikel eine Größe von weniger als 30 Mikron haben.

15. Verfahren zur Erhaltung eines saccharose-, laktose-, ei- und sojabohnenfreien pflanzlichen Lebensmittelerzeugnisses, nach allen Ansprüchen von 1 bis 14, das folgende Schritte umfasst:
Bereitstellung eines Hauptbestandteils in Fluidform, das Wasser und mikronisierte Partikel von glutenfreien Vollkorn-Getreidesamen umfasst, wobei die glutenfreien Getreide aus der Gruppe bestehend aus: Reis, Mais, Hirse, Buchweizen, Sorghum, Amarant, Quinoa ausgewählt werden,
Mikronisierung der Getreidesamen, um mikronisierte Partikel zu erhalten,
Hinzufügen von Verdickungsmitteln natürlichen und/oder künstlichen Ursprungs, die zu einem Anstieg der Dicke und Konsistenz des Hauptbestandteils führen, und von Aromastoffen, welche der Laktose den Charakter eines Nahrungsmittelersatzes verleihen, wie ein Nahrungsmittelersatz in Form eines pflanzlichen Getränks,
wobei der Mikronisierungsschritt vollständig im Wasser stattfindet, um die mögliche Oxidation der Samen zu vermeiden, wobei das Lebensmittelerzeugnis Vollkornsamen enthält, die Keimlinge sind.

16. Verfahren nach Anspruch 15, wobei die Vollkornsamen Reissamen sind.

17. Verfahren nach Anspruch 15, wobei der Mikronisierungsschritt bei einem Druck zwischen 50 und 1500 Bar stattfindet, um eine Partikelgröße von weniger als 27 Mikron zu erhalten und wobei das Lebensmittelerzeugnis pasteurisiert und/oder durch Ultrahocherhitzung sterilisiert wird oder wobei das Lebensmittelerzeugnis bei einem Druck in einem Bereich zwischen 3000 und 15000 Bar behandelt wird.

18. Verfahren nach einem der Ansprüche 15 bis 17, wobei das Lebensmittelerzeugnis Samen reich an bioverfügbaren Nährstoffen enthält, die durch Behandlungen erhalten werden wie Glucotransaminase-basierte Behandlungen für die Verdichtung von Proteinen und/oder Alfa-Beta-Amylasen, die Stärken hydrolysieren, und/oder allgemein Behandlungen mit anderen Enzymen und/oder durch Milchsäuregärung.

19. Verfahren nach einem der Ansprüche 15 bis 18, die folgende Schritte umfassen:
Hinzufügen von Lipiden, wie Kokosöl und/oder Olivenöl und/oder Samenöl und/oder Pflanzenöl im Allgemeinen und/oder Pflanzenmargarinen,
Emulgieren der Lipide oder Fettsäuren, um dem Lebensmittelerzeugnis cremige und konsistente Eigenschaften zu verleihen, und/oder
Hinzufügen des Hauptbestandteils, das Leguminosesamen umfasst und/oder Leguminosesamen, die aus der Gruppe bestehend aus Bohnen und/oder Ackerbohnen und/oder Erbsen und/oder Lupinen und/oder Kichererbsen und/oder Erdnüssen und/oder Linsen und/oder Platterbsen und/oder Fabaceae bzw. Bäumen wie Akazien (Acacia) und/oder Pagodenbaum (Sophora) und/oder falsche Akazie (Robinia pseudoacacia) und/oder Johannisbrotbaum (Ceratonia siliqua) und/oder Samen aus verzehrbaren und/oder Heilpflanzen wie beispielsweise Taraxacum, Knoblauch, Aloe, Lorbeer, Kamille ausgewählt werden.

20. Verfahren nach einem der Ansprüche 15 bis 19, die einen Trocknungsschritt, zumindest teilweise, des Lebensmittelerzeugnisses umfassen, durch Zerstäubungsbehandlungen, Rolltrommel, Mikrowellen, Wärmebehandlungen, Exsikkatoren, Entfeuchter.

## Revendications

1. Produit alimentaire végétal, exempt de saccharose, lactose et d'oeuf, comprenant un ingrédient de base, dans lequel ledit ingrédient de base comprend de l'eau et des particules micronisées de graines de céréales complètes sans gluten et est sous la forme d'un fluide, dans lequel il comprend des épaississants et des arômes, donnant audit produit alimentaire un caractère de substitut alimentaire sous la forme d'une boisson végétale **caractérisé en ce que** lesdites céréales sans gluten sont sélectionnées parmi le groupe composé de: riz, maïs, millet, sarrasin, sorgho, amarante, quinoa, **en ce que** ledit produit alimentaire végétal ne contient pas de soja et **en ce que** lesdites graines complètes sont des graines germées.

2. Produit alimentaire végétal selon la revendication 1, dans lequel le pourcentage d'eau est entre 50% et 95%.

3. Produit alimentaire selon la revendication 1, dans lequel lesdites graines complètes sont des graines de riz.

4. Produit alimentaire selon l'une des revendications précédentes, dans lequel lesdits épaississants comprennent de la carraghénine et/ou de l'agar-agar et/ou des amidons et/ou des graines de caroube et/ou du guar et/ou du xanthane.

5. Produit alimentaire selon la revendication 1, dans lequel lesdits arômes comprennent du diacétyle et de l'acide butyrique, pour donner un arôme de beurre, et/ou de l'acide valérique et/ou de l'acide isobutyrique, pour donner un arôme de fromage et/ou de l'heptanone méthyle thiobutyrate, pour donner un arôme de gorgonzola.

6. Produit alimentaire selon la revendication 1, dans lequel lesdits arômes comprennent des molécules aromatiques pour aromatiser des viandes transformées.

7. Produit alimentaire selon la revendication 1, dans lequel lesdits arômes comprennent de la triméthylamine pour donner un arôme de poisson.

8. Produit alimentaire selon l'une des revendications précédentes, dans lequel lesdits arômes comprennent des arômes de type naturel et/ou artificiel, et/ou du benzaldéhyde ou de l'aldéhyde benzoïque pour donner un arôme d'amande et de cerise noire, et/ou de l'anéthole pour donner un arôme anisé, et/ou g-nonalactone pour donner un arôme de noix de coco, et/ou de l'eugénol pour donner un arôme de canelle, et/ou du menthol pour donner un arôme balsamique, et/ou du L-carvone pour donner un arôme de menthe poivrée, et/ou de la vanilline et/ou de l'éthylvanilline pour donner un arôme de vanille, et/ou du bisméthyle-thiométhane pour donner un arôme de truffe, et/ou du phényl-méthyle-butyrate pour donner un arôme de pomme, et/ou de butanoate d'éthyle pour donner un arôme de vinaigre, et/ou d'acétate d'éthyle pour donner un arôme de kiwi, et/ou d'amylacétate-isovalérate isoamyle et/ou d'ylang ylang pour donner un arôme de banane, et/ou de fenchone pour donner un arôme de fenouil, et/ou d'apiol pour donner un arôme de persil, et/ou de furyle-méthanéthiol et/ou d'alpha-furfurylmercaptan pour donner un arôme de café, et/ou de β-damascenonetetramethylpyrazine pour donner un arôme de thé, et/ou d'acide phénylacétique et/ou d'acétate de phényléthyle pour donner un arôme de miel, et/ou de g-undecalactone pour donner un arôme de pêche, et/ou de caproate d'allyle pour donner un arôme d'ananas, et/ou frambinone et/ou de cétone de framboise pour donner un arôme de framboise, et/ou cinnamate d'éthyle pour donner un arôme de cerise, et/ou de butanoate de méthyle éthyle pour donner un arôme de fruits rouges, et/ou méthyle-thiopropanol pour donner un arôme de pomme de terre cuite, et/ou de disulfure de diallyle pour donner un arôme d'ail, et/ou de disulfure d'allyle et de propyle pour donner un arôme d'oignon, et/ou méthoxy-méthyle-pyrazine pour donner un arôme de poivron, et/ou d'alcool d'heptanol et d'octanol pour donner un arôme de champignon, et/ou de méthyle-pyridyle-cétone pour donner un arôme de popcorn, et/ou de butanoate d'éthylhydroxy pour donner un arôme de meringue, et/ou d'acide pyroligneux pour donner un arôme fumé, et/ou de furanéol pour donner un arôme de fraise, et/ou de méthoxy-méthyle-pyrazine pour donner un arôme de noisette grillée, et/ou les arômes de plantes aromatiques, naturelles et synthétiques, et/ou de fumage de hêtre, et/ou d'épices et/ou d'arômes pour les épices.

9. Produit alimentaire selon l'une des revendications précédentes, dans lequel ledit produit alimentaire comprend des lipides, tels que l'huile de noix de coco et/ou l'huile d'olive et/ou l'huile de graines et/ou l'huile végétale en général et/ou des margarines végétales.

10. Produit alimentaire selon l'une des revendications précédentes, dans lequel ledit produit alimentaire comprend des graines riches en substances nutritionnelles biodisponibles obtenues par des traitements tels que les procédés enzymatiques, tels que les traitements à base de glucotransaminase pour compacter les protéines et/ou d'alpha-bêta-amylases qui hydrolysent les amidons, et/ou, en général, des traitements avec d'autres enzymes et/ou par la fermentation d'acide lactique.

11. Produit alimentaire selon l'une des revendications précédentes, dans lequel ledit produit alimentaire comprend de l'eau pure et/ou de l'eau purifiée et/ou de l'eau minérale et/ou de l'eau de source.

12. Produit alimentaire selon l'une des revendications précédentes, dans lequel ledit produit alimentaire est pasteurisé et/ou stérilisé par UHT ou traité à une pression dans une gamme entre 3000 et 15000 bars.

13. Produit alimentaire selon l'une des revendications précédentes, dans lequel ledit ingrédient de base comprend des graines de légumes et/ou dans lequel ledit ingrédient de base comprend des graines de légumes sélectionnées parmi le groupe composé de haricots et/ou fèves et/ou de pois et/ou de lupins et/ou de pois chiches et/ou cacahuètes et/ou de lentilles et/ou de jarosse et/ou fabacées et/ou d'arbres tels que l'acacia (Acacia) et/ou d'arbre des pagodes (Sophora) et/ou de faux acacia (Robinia pseudoacacia) et/ou de caroubier (Ceratonia siliqua) et/ou dans lequel ledit ingrédient de base comprenant des graines obtenues d'herbes comestibles et/ou officinales, comme, par exemple, pissenlit, ail, aloès, laurier, camomille.

14. Produit alimentaire selon l'une quelconque des revendications précédentes, dans lequel lesdites particules micronisées ont une taille inférieure à 30 microns.

15. Procédé pour obtenir un produit alimentaire végétal, exempt de saccharose, lactose, oeuf et soja selon l'une des revendications 1 à 14, comprenant les étapes suivantes:
fournir un ingrédient de base sous la forme d'un fluide et comprenant de l'eau et des graines de céréales complètes sans gluten, dans lequel lesdites céréales sans gluten sont sélectionnées parmi le groupe composé de: riz, maïs, millet, sarrasin, sorgho, amarante, quinoa,
microniser lesdites graines de céréales afin d'obtenir des particules micronisées,
fournir des épaississants, d'origine naturelle et/ou artificielle qui entraînent une augmentation de la densité et de la consistance de l'ingrédient de base, et des arômes, lesdits arômes donnant audit produit alimentaire un caractère de substitut alimentaire, tel qu'un substitut alimentaire sous la forme de boisson végétale,
dans lequel ladite étape de microniser a lieu totalement dans l'eau pour éviter l'oxydation possible desdites graines,
dans lequel ledit produit alimentaire comprenant des graines complètes qui sont des graines germées.

16. Procédé selon la revendication 15, dans lequel lesdites graines complètes sont des graines de riz.

17. Procédé selon la revendication 15, dans lequel ladite étape de microniser survient à une pression entre 50 et 1500 bars pour obtenir une taille de particule inférieure à 27 microns, et dans lequel ledit produit alimentaire est pasteurisé et/ou stérilisé par UHT ou dans lequel ledit produit alimentaire est traité à une pression dans une range entre 3000 et 15000 bars.

18. Procédé selon l'une quelconque des revendications 15 à 17, dans lequel ledit produit alimentaire comprend des graines riches en substances nutritionnelles biodisponibles obtenues par des traitements tels que les procédés enzymatiques, tels que les traitements à base de glucotransaminase pour compacter les protéines et/ou d'alpha-bêta-amylases qui hydrolysent les amidons, et/ou, en général, des traitements avec d'autres enzymes et/ou par la fermentation d'acide lactique.

19. Procédé selon l'une des revendications 15 à 18, comprenant les étapes de :
fournir des lipides, tels que l'huile de noix de coco et/ou l'huile d'olive et/ou l'huile de graines et/ou l'huile végétale en général et/ou les margarines végétales,
émulsifier lesdites lipides or acides lipidiques pour donner des caractéristiques d'onctuosité et consistance audit produit alimentaire, et/ou
fournir ledit ingrédient de base comprenant des graines de légumes et/ou des graines de légumes sélectionnées parmi le groupe composé de haricots et/ou fèves et/ou de pois et/ou de lupins et/ou de pois chiches et/ou cacahuètes et/ou de lentilles et/ou de jarosse et/ou fabacées et/ou d'arbres tels que l'acacia (Acacia) et/ou d'arbre des pagodes (Sophora) et/ou de faux acacia (Robinia pseudoacacia) et/ou de caroubier (Ceratonia siliqua) et/ou de graines obtenues d'herbes comestibles et/ou officinales, comme, par exemple, pissenlit, ail, aloès, laurier, camomille.

20. Procédé selon l'une des revendications 15 à 19, comprenant une étape de séchage au moins partiel dudit produit alimentaire par traitement d'atomisation, tambour à rouleaux, micro-ondes, traitements thermiques, dessiccateurs, déshydrateurs.
